# EUROPÄISCHE PATENTSCHRIFT

(11) **EP 0 891 138 B1**
(45) Veröffentlichungstag und Bekanntmachung des Hinweises auf die Patenterteilung: **06.12.2000**
(21) Anmeldenummer: 97915446.5
(22) Anmeldetag: 27.03.1997
(51) Int. Cl.: A23C 9/15, A23C 19/05

(54) **MOLKENKÄSE- UND DESSERTPRODUKTE AUF MILCHBASIS**
MILK-BASED WHEY AND DESSERT PRODUCTS
PRODUITS DE LACTOSERUM ET DE DESSERT A BASE DE LAIT

(30) Priorität: 27.03.1996 DE 19612058; 21.03.1997 DE 19711805
(43) Veröffentlichungstag der Anmeldung: 20.01.1999
(73) Patentinhaber: NZMP (Germany) GmbH, 25462 Rellingen (DE)
(72) Erfinder: CORDTS, Hans-Ulrich, D-24589 Eisendorf (DE)
(74) Vertreter: Siewers, Gescha, Dr.
(86) Internationale Anmeldenummer: EP9701564
(87) Internationale Veröffentlichungsnummer: WO9735485

(56) Entgegenhaltungen:
- EP-A- 0 283 101
- EP-A- 0 308 091
- EP-A- 0 398 408
- EP-A- 0 438 201
- EP-A- 0 519 127
- EP-A- 0 642 740
- WO-A-94/01000
- WO-A-97/04660
- WO-A-97/08956
- FR-A- 2 298 955
- MILCHWISSENSCHAFT, Bd. 47, Nr. 3, 1.Januar 1992, Seiten 157-159, XP000277669 MAHAUT M ET AL: "EFFECT OF WHEY PROTEIN ADDITION AND HEAT TREATMENT OF MILK ON THE VISCOSITY OF UF FRESH CHEESES"
- PATENT ABSTRACTS OF JAPAN vol. 015, no. 361 (C-0867), 12.September 1991 & JP 03 143358 A (SAN EI CHEM IND LTD), 18.Juni 1991,
- JOURNAL OF FOOD SCIENCE, Bd. 54, Nr. 5, 1.September 1989, Seiten 1213-1217, 1221, XP000080926 AGUILERA J M ET AL: "PROPERTIES OF MIXED AND FILLED-TYPE DAIRY GELS"

## Beschreibung

Die Erfindung betrifft Dessertprodukte auf Milchbasis und Molkenkäseprodukte und ist in den Ansprüchen definiert.

Im Zuge zunehmend gesundheitsbewußter Ernährung erfreuen sich Dessertprodukte auf Basis von Frischkäse großer Beliebtheit. Zu den Frischkäsesorten gehören Quark, Rahmfrischkäse, Doppelrahmfrischkäse und Schichtkäse. Molkenkäse werden hingegen aus Molke selbst hergestellt; ein typischer Molkenkäse ist Ricotta, der zunehmend nicht nur in der traditionellen Küche eine Rolle spielt. Bei der Herstellung von Frischkäse fallen beträchtliche Mengen Molke an, deren wirtschaftliche Verwertung für die Milchindustrie ein Problem darstellt. Zwar wird ein Teil der Molke in Form von Molkenpulver in der Süßwaren- und Nährmittelindustrie verbraucht und Molke wird auch für die Milchzuckergewinnung sowie teilweise für die Milchsäure- oder Alkoholherstellung eingesetzt. Ein Teil des Molkenpulvers wird auch von der Futtermittelindustrie weiterverarbeitet, aber die direkte Verfütterung von Molke ist wegen des relativ hohen Preises des Produktes kaum noch üblich. Molke und ihre Weiterverarbeitung stellen somit für die Milchindustrie eine deutliche Belastung dar, da eine wirtschaftliche Verwertung nur teilweise möglich ist.

Es besteht daher noch ein Bedürfnis nach frisch- bzw. molkenkäseähnlichen Produkten, die als Desserts angeboten werden können, bei deren Herstellung kein Molkenanteil anfällt.

"Die Veröffentlichung "Effect of whey protein addition and heat treatment of milk on the viscosity of UF fresh cheeses" ("Milchwissenschaft", Band 47, Nr. 3, 1992) beschreibt die Verwendung von nativem Molkenproteinkonzentrat bei der Herstellung von gesäuertem Frischkäse. In dieser Entgegenhaltung ist der Säuerungsprozeß der ausschlaggebende Verfahrensschritt, der es ermöglicht, überhaupt ein Milchgel zu erzeugen. Das wird dadurch erzielt, daß bei einem sinkenden pH-Wert das Casein nach Durchlaufen des isoelektrischen Punktes nach In-Lösung-Gehen des Calciumcitratkomplexes durch die Aggregation und Fusion der Caseinmyzellen von kolloidalem Zustand in die Gelphase übergeht. Die Aufgabe der vorliegenden Erfindung ist daher die Zurverfügungstellung neuartiger Dessertprodukte mit gelartiger Konsistenz, ohne Zusatz von Verdickungsmitteln und ohne Säure- oder Labfällung der Proteine."

Erfindungsgemäß werden jetzt Dessertprodukte auf Milchbasis, worunter im folgenden auch molkenkäseähnliche Produkte verstanden werden, vorgeschlagen, bei deren Herstellung keine Molke anfällt und die gekennzeichnet sind durch einen Gehalt an einer Milchproteinmischung, deren 10%-ige wäßrige Lösung bei Erwärmung auf 90°C während einer Zeitspanne von 10 Min. ein Gel bildet und die mehr als 65% Molkenproteine enthält.

Überraschenderweise wurde jetzt festgestellt, daß es möglich ist, frischkäseähnliche Dessertprodukte herzustellen, ohne daß bei deren Herstellung Molke anfällt und deren Struktur von glatt und cremig bis grob und grießpuddingähnlich variiert werden kann. Wesentlich ist die Zugabe einer Milchproteinmischung zu dem Gemisch aus Milch, Sahne oder Magermilch, oder Molke und/oder Buttermilch, auch in Mischung oder rekombiniert und/oder eingedickt, wobei diese Milchproteinmischungen mehr als 65% Molkenproteine, im folgenden als MP abgekürzt, enthalten und in wäßriger 10%-iger Lösung bei der Erwärmung auf 90°C während einer Zeitdauer von 10 Min. ein Gel bilden. Je nach Gelierfähigkeit dieser Milchproteine kann die Zusatzmenge variiert werden und beträgt zwischen etwa 2 bis 10 Gew.-%, bezogen auf die Gesamtmasse der zu verarbeitenden Milchmischungen. Für die Milchproteinmischung werden überwiegend Molkenproteinkonzentrate eingesetzt, die verschiedene Zusammensetzung und funktionelle Eigenschaften haben können, wenn sie der oben genannten Forderung an die Bedingungen der Gelbildung entsprechen. Unter den Begriff Milchproteinmischung in diesem Sinne fallen nicht Vollmilch-, Magermilch-, Buttermilch- oder Molkenpulver, auch teilentzuckert oder teilentmineralisiert, oder Joghurt-, Quark- oder Käsepulver und ähnliche Produkte.

Ein besonderer Vorteil des erfindungsgemäßen Verfahrens besteht darin, daß zur Herstellung der Produkte keine Hydrokolloide eingesetzt werden müssen.

Zur Herstellung der erfindungsgemäßen Dessertprodukte werden Milch, also beispielsweise Voll- oder Magermilch und/oder Sahne, und/oder Molkenprodukte bzw. auch deren Rekombinate sowie die Milchproteinmischung zusammen mit Zuckern und gegebenenfalls farb- oder geschmacksgebenden weiteren Zutaten wie beispielsweise Kakao, Schokoladenpulver, Kaffee-Extrakt, Carotin oder zugelassene andere Lebensmittelfarbstoffe vermischt, wobei die Aufheizung der Mischung direkt oder indirekt durch Heißwasser oder Dampf erfolgen kann. Das Verfahren kann kontinuierlich z.B. in Schabewärmetauschern oder diskontinuierlich z.B. in einem Kutter durchgeführt werden. Die Mischung wird auf Temperaturen von etwa 75 bis 90°C erhitzt und heißgehalten, wobei ab etwa 65°C der Grad der mechanischen Bearbeitung großen Einfluß auf die Struktur des Endproduktes hat. Bei Vermeidung des Einschlagens von Gas ist das Endprodukt von einer eher glatten cremigen Struktur, während das Einschlagen von Gas unter stärkerer mechanischer Bearbeitung zu einem Produkt von leicht aufgeschlagener gröberer Struktur bis zu einer grießpuddingähnlichen Textur führt.

Die Heißhaltezeit beträgt je nach Temperatur etwa 5 bis 10 Min. Bei einer Temperatur von etwa 80°C reicht in der Regel eine Heißhaltezeit von etwa 10 Min. zur Gelbildung vollständig aus. Die heiße Mischung wird dann homogenisiert, beispielsweise einstufig bei etwa 200 bar und kann dann konfektioniert und gekühlt werden. Die Produkte können in üblicher Weise Zusätze wie Schokoladenpulver oder Aromen wie Vanillearoma enthalten und können mit Fruchtzubereitungen in an sich bekannter Weise unterlegt werden.

Die Trockenmasse der erfindungsgemäßen Dessertprodukte kann zwischen etwa 25 bis 35 Gew.-%, der Proteingehalt zwischen 4 bis 10 Gew.-% und der Fettgehalt zwischen 0 bis 15 Gew.-% variiert werden.

In Ähnlicher Weise kann Ricotta hergestellt werden, wobei eine Mischung aus Milch und Rahm auf etwa 45°C erhitzt und dann das Milchprotein zugegeben wird, bis sich eine vollständige Lösung ergeben hat. Die Mischung wird dann ebenfalls auf 80°C erhitzt und 10 Min. bei dieser Temperatur belassen und entweder nach Beendigung der Heißhaltezeit gleich abgefüllt oder vorher bei etwa 100 bis 300 bar aseptisch homogenisiert und dann verpackt.

Im übrigen hat sich gezeigt, daß bei der Nachfrage von Produkten auf Frischkäse- und Molkenkäsebasis zunehmend aus diätetischen Gründen Produkte verlangt werden, die einer besonders gesundheitsbewußten Ernährung entsprechen und somit im Zucker- und Fettanteil reduziert sind bzw. die zusätzlich Nahrungsergänzungsmittel und Ballaststoffe enthalten. Die Erfindung betrifft daher auch Dessert- und Molkenkäseprodukte, bei denen der übliche Zucker- bzw. Milchfettanteil durch entsprechende physiologisch unbedenkliche Austauschstoffe ganz oder teilweise ersetzt ist bzw. die Basisstoffe und/oder Nahrungsergänzungsmittel enthalten.

Als Zuckeraustauschstoff für die normalerweise zum Süßen eingesetzte Saccharose kommen diejenigen Substanzen in Betracht, die auch bereits jetzt auf dem Diabetiker- oder Diätetiksektor eingesetzt werden, insbesondere Sorbitol, Fructose, Inulin, Polydextrose, Isomalt, Maltitol, Xylitol, Mannitol oder Lactitol, wobei allerdings zu beachten ist, daß ein Teil dieser Zuckeraustauschstoffe zwar dem Fertigprodukt Körper gibt, aber im Süßungsgrad deutliche Unterschiede zur Saccharose aufweist. Hierzu gehören die Zuckeralkohole und Isomalt sowie Polydextrose und Polyfructose. Bei Verwendung dieser Substanzen muß daher ein Nachsüßen mit Intensivsüßstoffen erfolgen, die lebensmittelrechtlich unbedenklich sind, wie beispielsweise Acesulfam K, Aspartam, Cyclamat, Saccharin, Thaumatin oder Neohesperidin DC, die in den bekannten üblichen Zugabemengen verwendet werden.

Da zunehmend, zumindest bei Diäten zur Gewichtsreduzierung, auch der Fettgehalt der konsumierten Nahrungsmittel gesenkt werden soll, gibt es bereits entsprechende diätetische Zubereitungen, in denen das normalerweise enthaltene pflanzliche oder tierische Fett ganz oder teilweise durch Fettaustauschstoffe ersetzt wird. Unter Fettaustauschstoffen versteht man Verbindungen, deren funktionelle oder technologische Eigenschaften den Fetten entsprechen, ohne daß sie aber den hohen physiologischen Brennwert von Fett erreichen. Die derzeit in den USA angewandten oder für eine Zulassung angemeldeten Fettaustauschstoffe bestehen aus Proteinen oder Maltodextrinen, die durch Mikropartikulation kugelförmig gestaltet sind und Teilchendurchmesser von 0,1 bis 0,3 µm aufweisen. Ihre Energiewerte sind gegenüber Fetten deutlich verringert, allerdings sind diese Verbindungen nur wenig hitzestabil, so daß ihre Anwendung beschränkt ist. Hingegen verhalten sich Saccharosepolyester, also die Veresterungsprodukte aus Saccharose mit Fettsäuren aus Baumwollsaat-, Maiskeim- und Sojaöl wie richtige Fette, aber sie werden enzymatisch nicht gespalten und sind deshalb unverdaulich und nicht resorbierbar. Sie gleichen aber technologisch in ihrem Verhalten den natürlichen Triglyceriden und können in entsprechender Weise wie die natürlichen Fette verarbeitet werden, wobei insbesondere auch ihre relative Hitzestabilität von Vorteil ist.

Da zunehmend eine Nachfrage nach Produkten besteht, die Ballaststoffe und/oder sogenannte Nahrungsergänzungsmittel, also Vitamine und Mineralsalze enthalten, können die erfindungsgemäßen Produkte zusätzlich damit ausgerüstet werden. Als Ballaststoffe eignen sich die auch sonst eingesetzten unverdaulichen Verbindungen wie Cellulose, Hemicellulose und Pentosane. Vitamine und Mineralsalze, insbesondere Salze von Spurenelementen, können, falls erwünscht, ebenfalls zugegeben werden. Diese Zusätze sind dem Fachmann nach Zusammensetzung und Dosierung allgemein bekannt.

Außerdem hat sich herausgestellt, daß die Verbraucher ebenso wie bei anderen Frischkäsearten häufig den Wunsch haben, diese Produkte nicht nur als Dessert, sondern auch als Brotaufstrich zu verwenden. Die mehr oder weniger puddingähnliche Struktur und Konsistenz der erfindungsgemäßen Desserts ist aber für eine Anwendung als Brotaufstrich nicht besonders geeignet. Es hat sich aber ergeben, daß sich in einfacher Weise eine Konsistenzänderung erzielen läßt, wenn der Anteil an in den Milchbestandteilen enthaltenen Fetten durch weitere Zugabe von tierischen oder pflanzlichen Fetten bzw. durch Fettaustauschstoffe erhöht wird in den Bereich von etwa 1 bis 40 Gew.-% Fettgehalt insgesamt. Vorzugsweise wird bei den nicht-diätetischen Produkten Butter oder ein Fett vergleichbarer Konsistenz eingesetzt, während bei den diätetischen Produkten mit verringertem Fettanteil die üblichen Fettsubstitute verwendet werden können. Daneben läßt sich die Konsistenz aber auch durch Änderung der Trockenmasse, also des Körpers, und durch Unterschiede in den Verfahrensparametern wie Erhöhung oder Erniedrigung des Druckes bei der Homogenisierung beeinflussen.
Die in ihrer Streichfähigkeit verbesserten Produkte werden vorzugsweise als Brotaufstriche eingesetzt und unterscheiden sich von den bisher auf dem Markt befindlichen Produkten insbesondere durch das Fehlen der bislang üblichen Zusätze an Stabilisatoren wie Hydrokolloide, Stärken oder Gelatine. Außerdem können sie im Fett- und Kohlehydratgehalt und somit im Kaloriengehalt auf Wunsch deutlich reduziert werden.

Die Erfindung wird im folgenden anhand der Beispiele näher erläutert:

### Beispiel 1

### Schokoladendessert aus Vollmilch oder Magermilch

Im Prozeßkocher oder Mischtank werden 78 kg Vollmilch oder Magermilch, 8,0 kg Milchproteinmischung mit den oben angegebenen Kriterien, 10,0 kg Zucker und 4,0 kg Schokoladenpulver gemischt. Falls ein festeres Produkt gewünscht wird, kann die Milchmenge auf 77 kg reduziert und die Milcheiweißmischung auf 9,0 kg erhöht werden. Eine Erhöhung des Milchzusatzes auf 79 kg und eine Reduktion der Milchproteinmischung auf 7 kg führt zu einem weichen cremigen Produkt.

Die Mischung wird nun auf Temperaturen zwischen 75 bis 90°C erhitzt und heißgehalten, wobei die Aufheizung direkt oder indirekt folgen kann. Um bei Verwendung von Magermilch eine zu starke Schäumung zu verhindern, ist eine stärkere mechanische Bearbeitung weitgehend zu vermeiden. Bei einer Temperatur von 80°C ist eine Heißhaltezeit von etwa 10 Min. ausreichend.

Der Zeitpunkt einer möglichen Zugabe von Aroma wie beispielsweise 150 g Vanille kann beliebig gewählt werden, es empfiehlt sich jedoch die Zugabe zu einem möglichst späten Zeitpunkt.

Die heiße Mischung wird dann homogenisiert, beispielsweise einstufig bei 250 bar, abgefüllt und sofort abgekühlt. Die Lagerungstemperatur beträgt 3 bis 5°C. Falls erwünscht, kann die Mischung auch auf eine Fruchtzubereitung, wie z.B. eine Kirschzubereitung aufgelegt werden.

Bei Verwendung von Magermilch ergibt sich ein Fettanteil von ca. 0,3%, bei Vollmilch entsprechend von etwa 3%. Der Eiweißanteil liegt bei Verwendung von Magermilch oder Vollmilch im Bereich zwischen 8 bis 11%. Die Trockenmasse des Fertigproduktes bewegt sich bei Magermilch zwischen 27 bis 30 und bei Vollmilch zwischen 30 bis 33 Gew.-%.

### Beispiel 2

### Schokoladendessert mit Rahm

Im Prozeßkocher oder Mischtank werden 55,5 kg Milch, 33,0 kg Sahne, 2,5 kg Milchproteinmischung mit den angegebenen Kriterien, 5,0 kg Zucker und 4,0 kg Schokoladenpulver gemischt. Die Mischung wird langsam auf Temperaturen von etwa 80°C erwärmt. Bei dieser Temperatur ist eine Heißhaltezeit von ca. 10 Min. ausreichend. Ab etwa 65°C ist eine stärkere mechanische Bearbeitung, die mit dem Einschlag von Gas verbunden ist, möglichst zu vermeiden, um ein glattes Endprodukt zu erzielen.

Falls gewünscht kann als Aroma 150 g Vanilleextrakt zugegeben werden. Die Zugabe sollte zu einem möglichst späten Zeitpunkt erfolgen.

Die heiße Mischung wird dann einstufig bei 200 bar homogenisiert, abgefüllt und sofort gekühlt. Die Lagerungstemperatur beträgt etwa 3 bis 5°C. Bei dieser Zubereitung beträgt die Trockenmasse 29,2%, der Eiweißanteil liegt bei 4,8 und der Fettanteil bei 13,3%.

Sowohl bei dem Produkt aus Beispiel 1 wie auch aus Beispiel 2 handelt es sich um solche mit einer glatten sehr cremigen Struktur, die von Testpersonen als hervorragend und von exzellentem Geschmack beurteilt wurden.

### Beispiel 3

### Schokoladenmousse aus Voll- oder Magermilch

Das nach Beispiel 1 hergestellte und durchgekühlte Produkt wird mit einer Aufschlagvorrichtung aufgeschlagen. Zum Aufschlagen wird Luft oder Stickstoff eingesetzt, beispielsweise 60 l/h Luft und 105 l/h Stickstoff. Das Aufschlagsvolumen sollte zwischen 50 bis 250% liegen.

Das Produkt weist eine geschäumte Struktur mit einem angenehm cremigen Mundgefühl auf.

### Beispiel 4

### Vanilledessert

Im Prozeßkocher oder Mischtank werden 61,0 kg Milch, 30,0 kg Sahne, 5,0 kg Zucker, 4,0 kg Milchproteinmischung und 5 g Beta-Carotin gemischt. Die Mischung wird auf Temperaturen zwischen 75 und 90°C erhitzt. Ab etwa 65°C ist eine stärkere mechanische Bearbeitung, die mit dem Einschlag von Gas verbunden ist, möglichst zu vermeiden, um ein glattes Endprodukt zu erzielen. Soll ein gröberes Endprodukt mit grießartiger und leicht aufgeschlagener Struktur erzielt werden, ist hingegen ab 65°C eine stärkere mechanische Bearbeitung unter Gaseinschlag notwendig. Bei einer Temperatur von 80°C ist eine Heißhaltezeit von etwa 10 Min. hinreichend. Die Zugabe des Aromas, nämlich 150 g Vanilleextrakt, sollte zu einem möglichst späten Zeitpunkt erfolgen.

Die heiße Mischung wird homogenisiert, beispielsweise einstufig bei 200 bar, abgefüllt und sofort gekühlt. Die Lagerungstemperatur beträgt 3 bis 5°C.

Das Produkt weist eine Trockenmasse von 26,5% sowie einen Eiweißanteil von 6,5 und einen Fettanteil von 12,0% auf.

Dieses Produkt weist, wenn auf Gaseinschlag und mechanische Bearbeitung weitestgehend bei höherer Temperatur verzichtet wird, eine eher glatte cremige Struktur auf. Wenn ab 65°C stärker mechanisch bearbeitet und Gas eingeschlagen wird, ergibt sich eine gröbere, eher grießähnliche und leicht aufgeschlagene Struktur.

### Beispiel 5

### Zuckerreduziertes Schokoladendessert

Im Mischtank werden 77 kg Vollmilch mit 9 kg Milchproteinmischung mit den angegebenen Eigenschaften, 5 kg Schokoladenpulver und 9 kg Lactitol sowie je 25 kg der Gesamtmischung 8,75 g Acesulfam K vermischt und die Mischung dann auf Temperaturen zwischen 75 bis 90°C heißgehalten. Bei einer Temperatur von 80°C ist eine Heißhaltezeit von 10 Min. ausreichend, die bei einer höheren Temperatur auf 8 Min. reduziert werden kann.

Die heiße Mischung wird dann homogenisiert bei beispielsweise 250 bar, sofort auf 60°C abgekühlt und abgefüllt. Die weitere Abkühlung erfolgt dann auf eine Temperatur unter 10°C, vorzugsweise auf die Lagertemperatur von 3 bis 5°C.

Der Fettanteil liegt bei etwa 3,1%, der Proteinanteil bei etwa 10% und die gesamte Trockenmasse beträgt etwa 32%.

### Beispiel 6

### Ricotta im direkten Erhitzungsverfahren

45 kg Vollmilch mit einem Gehalt von 3,50% Fett und 35 kg Rahm mit 30% Fett oder eine eingestellte Milch mit einem Fettgehalt von 12,32% in Mengen von 80 kg werden in einem Prozeßkocher gegeben. Falls gewünscht, kann zur Geschmacksabrundung in diesem Stadium 0,10 bis 0,20 Gew.-% Kochsalz zugesetzt werden. Die Masse wird dann durch direkte Dampfinjektion erwärmt, wobei Messer und Wandschaber auf kleinster Stufe bis zum Ende des Prozesses laufen. Bei Erreichung einer Temperatur von 45°C werden 8 kg Milchprotein zugesetzt und voll in Lösung gebracht. Durch die direkte Dampfinjektion werden dem Endprodukt 12 kg Dampfkondensatz zugeführt. Die Mischung wird dann weiter erwärmt und beginnt bei etwa 68°C zu wallen unter Schaumentwicklung. Dieser Schaum bricht jedoch bei etwa 75 bis 80°C zusammen. Die Mischung wird dann bei der Temperatur von 80°C 10 Min. lang gehalten und daran anschließend entweder gleich verpackt oder aseptisch einstufig bei 100 bis 300 bar homogenisiert und daran anschließend portioniert.

Das unmittelbar nach der Herstellung abgefüllte Produkt hat das Erscheinungsbild eines dünnflüssigen Grießpuddings und bindet beim Erkalten sehr stark unter begleitender Verfestigung ab. Das erkaltete Produkt weist eine körnige feste Struktur auf.

Durch eine Homogenisierung vor dem Abfüllen kann das Produkt von der Feinstruktur her sehr cremig gemacht werden, wobei gilt, daß die Struktur um so feiner und das Endprodukt nach dem Erkalten um so fester wird, je höher der Homogenisierdruck ist. Falls nicht separat homogenisiert werden soll, kann ein festeres Endprodukt auch durch Erhöhung der Dosierung von Milchproteinen auf 9,00% erhöht werden.

Das fertige Produkt weist eine Trockenmasse von 24 bis 26%, einen absoluten Fettgehalt von etwa 10% und einen Proteingehalt von ca. 8,40% auf.

### Beispiel 7

### Ricotta im indirekten Erhitzungsverfahren

75 kg Vollmilch mit einem Gehalt an 3,50% Fett und 18 kg Rahm mit 40% Fettgehalt werden zusammen in den Prozeßkocher gegeben, wobei 0,10 bis 0,20 Gew.-% Kochsalz zur Geschmacksabrundung zugefügt werden können. Durch Heißwasserinjektion in den Mantel des Prozeßkochers wird die Mischung dann erwärmt, wobei Turborad und Wandschaber auf kleinster Stufe bis zum Ende des Prozesses laufen gelassen werden. Bei Erreichung von 45°C wird das Milchprotein in das Milch-Sahne-Gemisch eingebracht und gelöst. Die Erwärmung wird dann fortgesetzt, wobei zur Verminderung der Schaumbildung ein Druck in Höhe von 0,50 bar angelegt werden kann. Bei ca. 68°C beginnt die heiße Mischung zu wallen und eine geringe Schaumentwicklung zu zeigen, wobei diese jedoch bei 75 bis 80°C zusammenfällt. Die Mischung wird dann auf mindestens 80°C erhitzt und während 10 Min. bei dieser Temperatur belassen. Unmittelbar danach kann das Produkt entweder gleich in die Verpackung abgefüllt oder, wie in Beispiel 6 beschrieben, aseptisch homogenisiert und anschließend verpackt werden.

Falls ein festeres Endprodukt gewünscht ist, kann der Anteil an Milchprotein auf 8,00 bis 9,00 Gew.-% erhöht werden.

Das fertige Produkt hat eine Trockenmasse von etwa 24,00 bis 26,00 % und weist einen absoluten Fettgehalt von ca. 10,00 % und einen Proteingehalt von etwa 8,40 % auf.

### Beispiel 8

### Brotaufstrich

Im Prozeßkocher werden 47 kg Vollmilch, 13 kg 30%-ige Sahne, 15 kg Zucker, 5 kg Kakaopulver und 8 kg Milchproteinmischung sowie 2 kg Buttermilchpulver und 10 kg Butter zusammengerührt und die Mischung dann auf 80°C erwärmt. Bei dieser Temperatur ist eine Heißhaltezeit von 10 Min. ausreichend. Die Mischung wird dann bei 200 bar homogenisiert und auf 30°C heruntergekühlt. Die abgekühlte Mischung wird dann portioniert und abgefüllt und weiter auf die Lagertemperatur von etwa 3 bis 5°C gekühlt.

Der Proteinanteil beträgt etwa 10%, der Fettanteil 15% und die Gesamttrockenmasse liegt im Bereich von 48%.

### Beispiel 9

### Zuckerreduzierter Brotaufstrich

47 kg Vollmilch, 13 kg 30%-ige Sahne, 9 kg Lactitol und 5 kg Kakaopulver und 8 kg Milchproteinmischung sowie 2 kg Buttermilchpulver und 5 kg Inulin werden zusammen mit 11 kg Butter zu einer schlanken Mischung verarbeitet und wie angegeben auf 80°C unter Rühren erwärmt und während einer Zeitspanne von 10 Min. bei dieser Temperatur belassen. Die Mischung wird dann unter Rühren mit 8,75 g / 25 kg Acesulfam K versetzt und nochmals sorgfältig durchgerührt. Daran anschließend erfolgt die Homogenisierung bei 250 bar und die sofortige Abkühlung auf 30°C. Die Mischung wird dann wie beschrieben portioniert, abgefüllt und auf Lagertemperatur weiter abgekühlt.

Der Proteingehalt des Aufstriches beträgt etwa 10%, der Fettgehalt 15% und die Gesamttrockenmasse betragt etwa 48%.

## Patentansprüche

1. Dessert- oder Brotaufstrichprodukt auf Milchbasis oder Molkenkäseprodukt, dadurch gekennzeichnet, daß die Gelbildung ausschließlich durch einen Gehalt an einer Milchproteinmischung erfolgt, die mehr als 65 Gew.-% Molkenproteine enthält und deren 10 Gew.-%-ige wäßrige Lösung bei einer Erwärmung auf 90°C während einer Zeitspanne von 10 Min. ein Gel bildet.

2. Dessertprodukt nach Anspruch 1, dadurch gekennzeichnet, daß der Gehalt an Milchproteinmischung etwa 2 bis 10 Gew.-%, bezogen auf die Gesamtmasse beträgt.

3. Dessertprodukt nach Anspruch 1 oder 2, dadurch gekennzeichnet, daß als Milchbasis Sahne, Vollmilch, Magermilch, Buttermilch und/oder Molke, auch als Rekombinat enthalten ist.

4. Dessertprodukt nach Anspruch 1 bis 3, dadurch gekennzeichnet, daß der Gehalt an Zucker und Milchfett ganz oder teilweise durch entsprechende physiologisch unbedenkliche Austauschstoffe ersetzt ist.

5. Dessertprodukt nach Anspruch 1 bis 4, dadurch gekennzeichnet, daß als Zuckeraustauschstoffe Sorbitol, Fructose, Inulin, Polydextrose, Isomalt, Maltitol, Xylitol, Mannitol und/oder Lactitol, ggf. unter weiterem Zusatz von Intensivsüßstoffen enthalten sind.

6. Dessertprodukt nach Anspruch 1 bis 5, dadurch gekennzeichnet, daß als Intensivsüßstoffe Acesulfam K, Aspartam, Cyclamat, Saccharin, Thaumatin und/oder Neohesperidin DC enthalten sind.

7. Dessertprodukt nach Anspruch 1 bis 6, dadurch gekennzeichnet, daß als Fettaustauschstoffe Saccharosepolyester enthalten sind.

8. Dessertprodukt nach Anspruch 1 bis 7, dadurch gekennzeichnet, daß Ballaststoffe und/oder zusätzliche Vitamine und/oder Mineralsalze enthalten sind.

9. Dessertprodukt nach Anspruch 1 bis 8, dadurch gekennzeichnet, daß es einen Gehalt an tierischen oder pflanzlichen Fetten mit streichfähiger Konsistenz von etwa 1 bis 40 Gew.-% aufweist.

10. Dessertprodukt nach Anspruch 1 bis 9, dadurch gekennzeichnet, daß es etwa 1 bis 15 Gew.-% Butter enthält.

11. Verfahren zur Herstellung eines Dessert- oder Brotaufstrichproduktes oder Molkenkäseproduktes nach Anspruch 1, dadurch gekennzeichnet, daß Vollmilch, Magermilch, Buttermilch, Sahne oder eine Milch-Sahne-Mischung und/oder Molke auch als Rekombinate mit Zucker oder Zuckeraustauschstoffen und ggf. Aromen und/oder Farbstoffen und/oder Nahrungsergänzungsmitteln und Ballaststoffen und/oder tierischen oder pflanzlichen streichfähigen Fetten sowie mit einer Milchproteinmischung, deren 10%-ige wäßrige Lösung bei der Erwärmung auf 90°C während eines Zeitraumes von 10 Min. ein Gel bildet und die mehr als 65 Gew.-% Molkenprotein enthält, vermischt, auf Temperaturen von etwa 75 bis 90°C erwärmt und bei dieser Temperatur mindestens 5 bis 10 Min. belassen, ggf, homogenisiert, konfektioniert und abgekühlt wird.

12. Verfahren nach Anspruch 11, dadurch gekennzeichnet, daß der Gehalt an der Milchproteinmischung etwa 2 bis 10 Gew.-% beträgt.

13. Verfahren nach Anspruch 11 oder 12, dadurch gekennzeichnet, daß ein Gasgemisch in die Mischung eingeschlagen wird.

14. Verfahren nach Anspruch 11 bis 13, dadurch gekennzeichnet, daß die Mischung bei 10 bis 300 bar homogenisiert wird.

## Claims

1. A milk-based dessert product or spread for bread or a whey cheese product, characterised in that the formation of a gel takes place solely through a content of a milk protein mixture which contains more than 65 percent by weight of whey proteins and whose 10 percent by weight aqueous solution forms a gel over a period of time of 10 minutes when heated to 90°C.

2. A dessert product according to Claim 1, characterised in that the content of milk protein mixture amounts to approximately 2 to 10 percent by weight related to the total mass.

3. A dessert product according to Claim 1 or 2, characterised in that cream, full-cream milk, skimmed milk, buttermilk and/or whey, also as a recombination, is contained as a milk base.

4. A dessert product according to Claim 1 to 3, characterised in that the sugar and milk-fat content is totally or partially replaced by appropriate, physiologically harmless substitutes.

5. A dessert product according to Claim 1 to 4. characterised in that sorbitol, fructose, inulin, polydextrose, isomalt, maltitol, xylitol, mannitol and/or lactitol are contained as sugar substitutes, optionally with the further addition of intensive sweetening-agents.

6. A dessert product according to Claim 1 to 5, characterised in that acesulfame K, aspartame, cyclamate, saccharin, thaumatin and/or neohesperidin DC are contained as intensive sweetening-agents.

7. A dessert product according to Claim 1 to 6, characterised in that sucrose polyesters are contained as fat substitutes.

8. A dessert product according to Claim 1 to 7, characterised in that roughage and/or additional vitamins and/or mineral salts are contained therein.

9. A dessert product according to Claim 1 to 8, characterised in that it has a content of approximately 1 to 40 percent by weight of animal or vegetable fats of spreadable consistency.

10. A dessert product according to Claim 1 to 9, characterised in that it contains approximately 1 to 15 percent by weight of butter.

11. A method of making a dessert product or spread for bread or a whey cheese product according to Claim 1, characterised in that full-cream milk, skimmed milk, buttermilk, cream or a milk and cream mixture and/or whey, also as recombinations, is mixed with sugar or sugar substitutes and optionally flavourings and/or colourings and/or food supplements and roughage and/or animal or vegetable spreadable fats as well as with a milk protein mixture whose 10 percent by weight aqueous solution forms a gel over a period of time of 10 minutes when heated to 90°C and which contains more than 65 percent by weight of whey protein, heated to temperatures of approximately 75 to 90°C and kept for at least 5 to 10 minutes at this temperature, optionally homogenised, packaged and cooled.

12. A method according to Claim 11, characterised in that the content of the milk protein mixture amounts to approximately 2 to 10 percent by weight.

13. A method according to Claim 11 or 12, characterised in that a gas mixture is forced into the mixture.

14. A method according to Claim 11 to 13, characterised in that the mixture is homogenised at 10 to 300 bar.

## Revendications

1. Produit de type dessert ou pâte à tartiner à base de lait ou produit fromager à base de lactosérum, caractérisé par le fait que la gélification se fait exclusivement grâce à une certaine teneur en un mélange de protéines du lait, contenant plus de 65 % en poids de protéines de lactosérum et dont une solution aqueuse à 10 % en poids forme un gel lorsqu'on la chauffe pendant 10 minutes à 90 °C.

2. Produit de type dessert selon la revendication 1, caractérisé par le fait que la teneur en mélange de protéines du lait est d'environ 2 à 10 % en poids rapporté à la masse totale.

3. Produit de type dessert selon la revendication 1 ou 2, caractérisé par le fait qu'il contient comme base lactée de la crème, du lait entier, du lait écrémé, du babeurre et/ou du lactosérum, ou encore une combinaison de ceux-ci.

4. Produit de type dessert selon les revendications 1 à 3, caractérisé par le fait que l'on remplace le sucre et la graisse du lait totalement ou partiellement par des produits de substitution appropriés physiologiquement acceptables.

5. Produit de type dessert selon les revendications 1 à 4, caractérisé par le fait qu'il contient comme substances de substitution du sucre du sorbitol, du fructose, de l'inuline, du polydextrose, de l'isomalte, du maltitol, du xylitol, du mannitol et/ou du lactitol, éventuellement en présence de produits à fort pouvoir sucrant.

6. Produit de type dessert selon les revendications 1 à 5, caractérisé par le fait qu'il contient comme produits à fort pouvoir sucrant de l'acésulfame K, de l'aspartame, du cyclamate, de la saccharine, de la thaumatine et/ou de la néohespéridine DC.

7. Produit de type dessert selon les revendications 1 à 6, caractérisé par le fait qu'il contient comme produit de remplacement des graisses un polyester de saccharose.

8. Produit de type dessert selon les revendications 1 à 7, caractérisé par le fait qu'il contient des fibres alimentaires et/ou des vitamines supplémentaires et/ou des sels minéraux supplémentaires.

9. Produit de type dessert selon les revendications 1 à 8, caractérisé par le fait qu'il contient environ 1 à 40 % en poids de graisses animales ou végétales ayant une consistence permettant de les tartiner.

10. Produit de type dessert selon les revendications 1 à 9, caractérisé par le fait qu'il contient environ 1 à 15 % de beurre.

11. Procédé de préparation d'un produit de type dessert ou d'une pâte à tartiner ou d'un produit fromager à base de lactosérum selon la revendication 1, caractérisé par le fait que l'on mélange du lait entier, du lait écrémé, du babeurre, de la crème ou un mélange lait/crème et/ou du lactosérum, ou encore une combinaison de ces produits, avec du sucre ou des produits de substitution du sucre, éventuellement avec des arômes et/ou des colorants et/ou des substituts de nutriments et des fibres alimentaires et/ou des graisses animales ou végétales tartinables, ainsi qu'avec un mélange de protéines du lait, dont une solution aqueuse à 10 % en poids donne un gel, lorsqu'on la chauffe pendant 10 minutes à 90 °C, et qui contient plus de 65 % en poids de protéines de lactosérum, que l'on chauffe le mélange à une température comprise entre environ 75 et 90 °C et que l'on maintient cette température pendant au moins 5 à 10 minutes, et que l'on procède éventuellement à une homogénéisation, au conditionnement et au refroidissement du produit obtenu.

12. Procédé selon la revendication 11, caractérisé par le fait que la teneur en mélange de protéines du lait est d'environ 2 à 10 % en poids.

13. Procédé selon la revendication 11 ou 12, caractérisé par le fait que l'on incorpore dans le mélange par battage un mélange de gaz.

14. Procédé selon les revendications 11 à 13, caractérisé par le fait que l'on homogénéise le mélange à une pression de 10 à 300 bars.
